# EUROPÄISCHE PATENTSCHRIFT

(11) **EP 3 951 065 B1**
(45) Veröffentlichungstag und Bekanntmachung des Hinweises auf die Patenterteilung: **13.12.2023**
(21) Anmeldenummer: 21183323.1
(22) Anmeldetag: 02.07.2021
(51) Int. Cl.: E02D 3/026, A01B 29/04, A01B 35/22, E01C 19/23, B60B 15/02, E02F 9/28, B28D 1/18, E21C 35/18, E21C 35/19

(54) **UMMANTELUNG FÜR EINE BODENBEARBEITUNGSWALZE**
CASING FOR A SOIL WORKING ROLLER
GAINE POUR UN ROULEAU DE TRAITEMENT DU SOL

(30) Priorität: 03.08.2020 DE 102020120377
(43) Veröffentlichungstag der Anmeldung: 09.02.2022
(73) Patentinhaber: Hamm AG, 95643 Tirschenreuth (DE)
(72) Erfinder: Meier, Matthias, Tirschenreuth (DE)
(74) Vertreter: Ruttensperger Lachnit Trossin Gomoll

(56) Entgegenhaltungen:
- DE-A1- 2 442 348
- DE-A1-102013 217 043
- DE-T5-112011 103 359
- DE-U1- 8 516 248

## Beschreibung

Die vorliegende Erfindung betrifft eine Ummantelung für eine Bodenbearbeitungswalze, an welcher wenigstens ein Walzenwerkzeug mit einem Wechselhalter und einem an dem Wechselhalter lösbar angebrachten oder anbringbaren Wechselwerkzeug vorgesehen ist.

Aus der WO 2013/107545 A2 ist eine Bodenbearbeitungswalze für eine Bodenbearbeitungsmaschine bekannt, welche einen Walzenkörper mit einem im Bodenbearbeitungsbetrieb um eine Walzendrehachse rotierenden Walzenmantel umfasst. An einer Außenumfangsfläche des Walzenmantels ist eine Vielzahl von Walzenwerkzeugen angebracht. Die Walzenwerkzeuge umfassen jeweils einen an der Außenumfangsfläche des Walzenmantels durch Verschweißung festgelegten Wechselhalter mit einer darin ausgebildeten, im Wesentlichen radial bezüglich der Walzendrehachse sich erstreckenden Befestigungsöffnung. Die an einem derartigen Wechselhalter anzubringenden Wechselwerkzeuge umfassen einen in die Befestigungsöffnung einzuschiebenden Befestigungsschaft. Bei in einer Befestigungsöffnung aufgenommenem Befestigungsschaft ist ein Wechselwerkzeug durch Klemmwirkung oder Rastwirkung an diesem festgehalten.

Bei einem aus der EP 2 843 135 A1 bekannten Aufbau eines Walzenwerkzeugs mit Wechselhalter und Wechselwerkzeug wird der in eine Befestigungsöffnung des Wechselhalters eingeführte Befestigungsschaft des Wechselwerkzeugs durch in seitliche Öffnungen des Wechselhalters eingesetzte und den Befestigungsschaft umgreifende Halteelemente am Wechselhalter arretiert.

Zum Loslösen eines so am Wechselhalter festgehaltenen Wechselwerkzeugs wird ein beispielsweise nach Art eines Brecheisens aufgebautes Werkzeug seitlich durch eine im Wechselhalter gebildete Öffnung hindurch in einen von dem Wechselhalter umgebenen Wechselhalterinnenraum eingeführt, bis es mit einem Beaufschlagungsbereich hinter dem in der Befestigungsöffnung des Wechselhalters aufgenommenen Befestigungsschaft des Wechselwerkzeugs zu liegen kommt.

Durch eine Hebelbewegung oder eine Keilwirkung des am Walzenmantel sich abstützenden Werkzeugs wird der Befestigungsschaft beaufschlagt und dadurch in Richtung aus der diesen aufnehmenden Befestigungsöffnung herausbewegt.

Aus der DE 85 16 248 U1 ist eine Halterung für einen Schrämmmeißel an einer Schrämmkette oder einer Schrämmwalze bekannt. Diese Halterung umfasst in einem Halter eine zylindrische Bohrung, in welche eine einen Schaft eines Werkzeugs umgebend angeordnete Schlitzbüchse unter radialer Vorspannung einsetzbar ist. Das Werkzeug ist durch einen in eine Ringnut in dessen Schaft eingesetzten und die Schlitzbüchse radial übergreifenden Federring an der Schlitzbüchse gehalten.

Die DE 24 42 348 A1 offenbart eine Fräswalze mit einem einen rohrartigen Nabenkörper umgebenden und in eine Mehrzahl von Segmenten unterteilten Befestigungskörper. An dem Befestigungskörper sind in Öffnungen desselben eingesetzte Fräszähne gehalten.

Aus der DE 10 2013 217 043 A1 ist ein Wechselhalter für eine Bodenbearbeitungswalze bekannt, welcher an eine Außenseite der Bodenbearbeitungswalze angeschweißt ist. In eine in dem Wechselhalter vorgesehene Öffnung ist ein Halterschaft eines an dem Wechselhalter festgelegten Wechselwerkzeugs eingesetzt.

Die DE 11 2011 103 359 T5 offenbart eine Ummantelung für eine Bodenbearbeitungswalze mit einer Mehrzahl von in Umfangsrichtung aufeinander folgend angeordneten, plattenartigen Ummantelungssegmenten.

Es ist die Aufgabe der vorliegenden Erfindung, eine Ummantelung für eine Bodenbearbeitungswalze vorzusehen, bei welcher ein in einem Wechselhalter aufgenommenes Wechselwerkzeug eines Walzenwerkzeugs in einfacher Weise von dem Wechselhalter gelöst werden kann.

Erfindungsgemäß wird diese Aufgabe gelöst durch eine Ummantelung für eine um eine Walzendrehachse drehbare Bodenbearbeitungswalze einer Bodenbearbeitungsmaschine, umfassend eine Mehrzahl von in Umfangsrichtung aufeinander folgend, einen Walzenkörper der Bodenbearbeitungswalze umgebend angebrachten oder anbringbaren Ummantelungssegmenten, wobei an einer von dem Walzenkörper abgewandt zu positionierenden Außenseite der Ummantelungssegmente eine Mehrzahl von Walzenwerkzeugen angeordnet ist, dadurch gekennzeichnet, dass wenigstens ein Teil der, vorzugsweise alle Walzenwerkzeuge einen an der Außenseite eines jeweiligen Ummantelungssegments angebrachten Wechselhalter und ein an dem Wechselhalter von diesem lösbar angebrachtes oder anbringbares Wechselwerkzeug umfasst, wobei in dem Wechselhalter eine Befestigungsöffnung zur Aufnahme eines Befestigungsschafts eines an dem Wechselhalter angebrachten oder anzubringenden Wechselwerkzeugs ausgebildet ist, wobei in Zuordnung zu wenigstens einem, vorzugsweise jedem Wechselhalter in dem diesen tragenden Ummantelungssegment eine Werkzeugdurchgriffsöffnung vorgesehen ist.

Durch das Vorsehen einer derartigen Werkzeugdurchgriffsöffnung wird es möglich, vermittels eines durch diese hindurchgeführten Werkzeugs auf den Befestigungsschaft des am Wechselhalter getragenen Wechselwerkzeugs einzuwirken und dadurch dieses vom Wechselhalter zu lösen. Das seitliche Eingreifen in den Wechselhalter vermittels eines hebelartig oder keilartig wirkenden Werkzeugs ist somit nicht erforderlich. Da erfindungsgemäß derartige Walzenwerkzeuge mit Wechselhalter und Wechselwerkzeug an einer Ummantelung für eine Bodenbearbeitungswalze und nicht unmittelbar am Walzenmantel der Bodenbearbeitungswalze selbst angebracht sind, können die auszuwechselnden Wechselwerkzeuge dann von den diese aufnehmenden Wechselhaltern gelöst werden, wenn die Ummantelung vom Walzenkörper entfernt ist. Dies ermöglicht einerseits eine deutlich einfachere Durchführung des Vorgangs zum Entfernen der Wechselwerkzeuge von den diese aufnehmenden Wechselhaltern und bietet andererseits die Möglichkeit, während dieser Bearbeitung der Ummantelung eine Bodenbearbeitungsmaschine entweder ohne Ummantelung der Bodenbearbeitungswalze oder mit einer anderen Ummantelung an der Bodenbearbeitungswalze zu betreiben.

Um einen das Loslösen zulassenden direkten Zugriff auf einen Befestigungsschaft zu erhalten, wird vorgeschlagen, dass die in Zuordnung zu dem wenigstens einen Wechselhalter vorgesehene Werkzeugdurchgriffsöffnung zu der in diesem ausgebildeten Befestigungsöffnung im Wesentlichen koaxial angeordnet ist.

In dem wenigstens einen Wechselhalter kann ein Wechselhalterinnenraum ausgebildet sein, wobei die in diesem Wechselhalter vorgesehene Befestigungsöffnung zu dem Wechselhalterinnenraum offen ist und die in Zuordnung zu diesem Wechselhalter vorgesehene Werkzeugdurchgriffsöffnung zu dem Wechselhalterinnenraum offen ist. Dabei kann dieser Wechselhalterinnenraum beispielsweise durch ein die Befestigungsöffnung vorzugsweise im Wesentlichen zylindrisch fortsetzendes Volumen bereitgestellt sein. Alternativ kann ein derartiger Wechselhalterinnenraum bezüglich der Befestigungsöffnung seitlich erweitert sein, wodurch Aufbaumaterial und somit auch Gewicht bei einem derartigen Wechselhalter eingespart werden kann.

Wenn bei an dem wenigstens einen Wechselhalter angebrachtem Wechselwerkzeug der Befestigungsschaft dieses Wechselwerkzeugs sich in den Wechselhalterinnenraum hinein erstreckt und mit einem Werkzeugangriffsende der Werkzeugdurchgriffsöffnung gegenüberliegend oder in die Werkzeugdurchgriffsöffnung eingreifend positioniert ist, ist das Werkzeugangriffsende so positioniert, dass vermittels eines geeigneten Werkzeugs direkt auf dieses eingewirkt werden kann.

Da bei der erfindungsgemäßen Ausgestaltung ein seitlicher Eingriff in den Wechselhalter zum Loslösen des Wechselwerkzeugs nicht erforderlich ist, kann bei einer besonders vorteilhaften Ausgestaltung vorgesehen sein, dass bei an dem wenigstens einen Wechselhalter angebrachtem Wechselwerkzeug der Wechselhalterinnenraum im Wesentlichen nur über die zu diesem offene Werkzeugdurchgriffsöffnung offen ist. Seitliche Eingriffsöffnungen im Wechselhalter können somit also vermieden werden, so dass der die Werkzeugdurchgriffsöffnung überdeckende Wechselhalter insbesondere dann, wenn in diesem ein Wechselwerkzeug getragen ist, die Werkzeugdurchgriffsöffnung gegen den Eintritt von Verunreinigungen vollständig abschließt.

Alternativ oder zusätzlich kann vorgesehen sein, dass bei an dem wenigstens einen Wechselhalter angebrachtem Wechselwerkzeug die Werkzeugdurchgriffsöffnung durch den Befestigungsschaft dieses Wechselwerkzeugs im Wesentlichen abgeschlossen ist. Auch auf diese Weise kann der Eintritt von Verunreinigungen in eine jeweilige Werkzeugdurchgriffsöffnung verhindert werden.

Die Erfindung betrifft ferner ein Verfahren zum Wechseln eines an einer erfindungsgemäß aufgebauten Ummantelung an dem wenigstens einen Wechselhalter angebrachten Wechselwerkzeugs, bei welchem Verfahren bei von dem Walzenkörper wenigstens teilweise losgelöstem Ummantelungssegment der in der Befestigungsöffnung des wenigstens einen Wechselhalters aufgenommene Befestigungsschaft durch die Werkzeugdurchgriffsöffnung hindurch beaufschlagt wird zum Herausbewegen des Befestigungsschafts aus der Befestigungsöffnung des wenigstens einen Wechselhalters.

Um den im Allgemeinen mit großer Kraft in einer Befestigungsöffnung gehaltenen Befestigungsschaft aus der Befestigungsöffnung herauszubewegen, wird vorgeschlagen, dass der Befestigungsschaft durch schlagende oder/und drückende Beaufschlagung aus der Befestigungsöffnung herausbewegt wird.

Dazu kann beispielsweise der Befestigungsschaft vermittels eines durch die Werkzeugdurchgriffsöffnung auf diesen einwirkenden Beaufschlagungswerkzeugs beaufschlagt werden. Ein derartiges Beaufschlagungswerkzeug kann beispielsweise bolzenartig ausgebildet sein.

Weiter kann vorgesehen sein, dass der Befestigungsschaft durch schlagende Beaufschlagung des Beaufschlagungswerkzeugs vermittels eines Schlagwerkzeugs beaufschlagt wird. Ein derartiges Schlagwerkzeug kann beispielsweise ein Hammer sein.

Die Erfindung betrifft ferner eine Bodenbearbeitungswalze für eine Bodenbearbeitungsmaschine, umfassend einen Walzenkörper und eine den Walzenkörper umgebende, erfindungsgemäß aufgebaute Ummantelung.

Ferner betrifft die Erfindung eine Bodenbearbeitungsmaschine mit wenigstens einer erfindungsgemäß aufgebauten Bodenbearbeitungswalze.

Die vorliegende Erfindung wird nachfolgend mit Bezug auf die beiliegenden Figuren detailliert beschrieben. Es zeigt:
- Fig. 1: eine perspektivische Ansicht einer Bodenbearbeitungsmaschine mit einer Bodenbearbeitungswalze;
- Fig. 2: die Bodenbearbeitungswalze der Bodenbearbeitungsmaschine der Fig. 1 in perspektivischer Ansicht;
- Fig. 3: die Bodenbearbeitungswalze der Fig. 2 mit einem von einem Walzenkörper der Bodenbearbeitungswalze losgelösten Ummantelungssegment eines an dem Walzenkörper vorgesehenen Arbeitsmantels;
- Fig. 4: ein an seiner Innenseite betrachtetes Ummantelungssegment;
- Fig. 5: das Loslösen eines in einem Wechselhalter gehaltenen Wechselwerkzeugs eines Walzenwerkzeugs der Bodenbearbeitungswalze der Fig. 2;
- Fig. 6: ein an einem Ummantelungssegment einer Ummantelung für eine Bodenbearbeitungswalze angeordnetes Walzenwerkzeug mit Wechselhalter und Wechselwerkzeug.

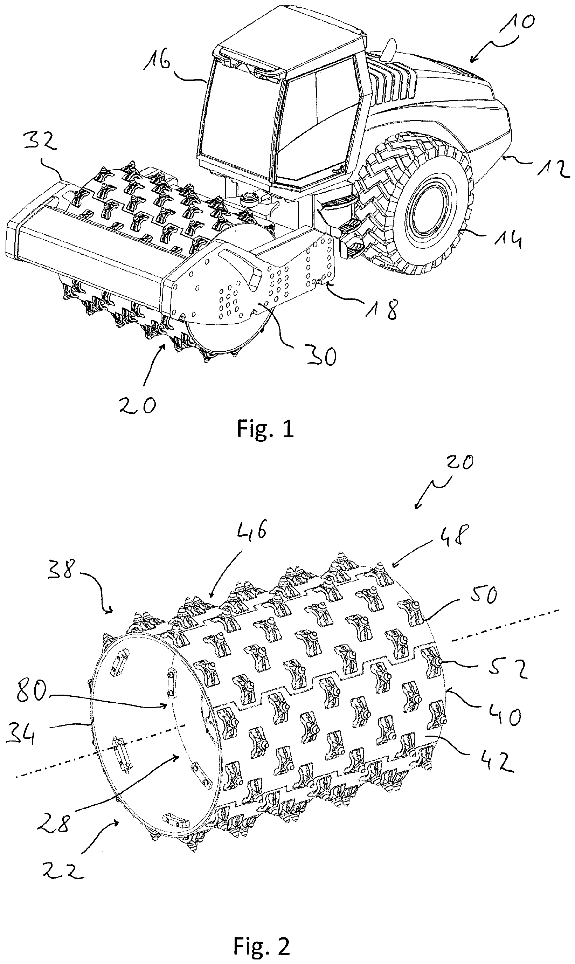

In Fig. 1 ist eine Bodenbearbeitungsmaschine allgemein mit 10 bezeichnet. Die Bodenbearbeitungsmaschine 10 umfasst einen Hinterwagen 12 mit einem daran vorgesehenen Antriebsaggregat und durch das Antriebsaggregat, beispielsweise eine Diesel-Brennkraftmaschine, angetriebenen Rädern 14. Am Hinterwagen 12 ist ferner eine Kabine 16 für eine die Bodenbearbeitungsmaschine 10 bedienende Bedienperson vorgesehen.

An einem mit dem Hinterwagen 12 schwenkbar verbundenen Vorderwagen 18 ist eine allgemein mit 20 bezeichnete Bodenbearbeitungswalze um eine Walzendrehachse W drehbar getragen. Die in Fig. 2 detaillierter dargestellte Bodenbearbeitungswalze 20 ist mit einem am Vorderwagen 18 drehbar gelagerten Walzenkörper 22 aufgebaut. Der Walzenkörper 22 umfasst eine im dargestellten Ausgestaltungsbeispiel mit zwei allgemein auch als Ronden bezeichneten Trägerscheiben aufgebaute Trägerstruktur 28, welche über jeweilige Lagerungsbereiche an seitlichen Rahmenbereichen 30, 32 des Vorderwagens 18 um die Walzendrehachse W drehbar getragen sind. In ihrem Außenumfangsbereich sind die beiden Trägerscheiben beispielsweise durch Verschweißung an einem im Wesentlichen zylindrischen und ringartig geschlossenen Walzenmantel 34 festgelegt.

An einer Walzenmantel-Außenseite 36 ist eine im Allgemeinen mit 38 bezeichnete Ummantelung vorgesehen. Der Ummantelung 38 umfasst im dargestellten Ausgestaltungsbeispiel sechs in Umfangsrichtung aufeinanderfolgende und unmittelbar aneinander anschließende Ummantelungssegmente 40, welche an die kreisartig gekrümmte Außenumfangskontur des Walzenmantels 34 angepasst gekrümmte Segmentschalen 42 aufweisen. Man erkennt in Fig. 2, dass die Segmentschalen 42 in ihren in Umfangsrichtung aneinander anschließenden Segmentschalen-Längsrändern 44 verzahnungsartig ineinander eingreifen.

Die Verdichterwalze 20 ist in diesem dargestellten Ausgestaltungsbeispiel als sogenannte Bodenbrecherwalze ausgebildet und weist dazu an einer Arbeits-Außenseite 46 der Ummantelung 38 an jedem der Ummantelungssegmente 40 eine Mehrzahl von Walzenwerkzeugen 48 auf. Im dargestellten Beispiel sind diese Walzenwerkzeuge 48 mit einem an einem jeweiligen Ummantelungssegment 40 beispielsweise durch Verschweißung festgelegten Wechselhalter 50 und einem im Wechselhalter aufgenommenen Wechselwerkzeug 52 in Form eines Meißels ausgebildet.

Jedes der vorzugsweise identisch zueinander ausgebildeten und bezüglich einer Längenmitte im Wesentlichen spiegelsymmetrisch aufgebauten Ummantelungssegmente 40 weist in Richtung der Walzendrehachse W in axialem Abstand zueinander vier Verbindungsbereiche 54, 56, 58, 60 auf. In jedem dieser vier Verbindungsbereiche 54, 56, 58, 60 können die Ummantelungssegmente 40 am Walzenmantel 34 des Walzenkörpers 22 festgelegt werden, so das über die gesamte axiale Länge der Ummantelungssegmente 40 eine stabile Anbindung an den Walzenkörper 22 gewährleistet ist. Die in den axialen Endbereichen 62, 64 der Ummantelungssegmente 40 liegenden Verbindungsbereiche 54, 60 bilden dabei jeweils einen End-Verbindungsbereich 66 bzw. 68, während die näher am Längenmittenbereich der Ummantelungssegmente 40 positionierten Verbindungsbereiche 56, 58 jeweils einen Mitten-Verbindungsbereich 70, 72 bilden.

In jedem der Verbindungsbereiche 54, 56, 58, 60 sind an einer der Walzenmantel-Außenseite 36 zugewandten Schalensegment-Innenseite 74 der Segmentschalen 42 ein oder mehrere Befestigungsorgane 76 vorgesehen. Dabei sind die in den Mitten-Verbindungsbereichen 70, 72 vorgesehenen Befestigungsorgane 76 plattenartig ausgebildet und beispielsweise durch Verschweißung an den Segmentschalen 42 derart festgelegt, dass sie sich im Wesentlichen in Umfangsrichtung erstrecken.

In Zuordnung zu diesen in den Mitten-Verbindungsbereichen 70, 72 angeordneten, plattenartigen und im Wesentlichen in Umfangsrichtung sich erstreckenden Befestigungsorganen 76 sind im Walzenmantel 34 schlitzartige und im Wesentlichen in Umfangsrichtung langgestreckte Befestigungsorgan-Durchgriffsöffnungen 78 vorgesehen. Diese sind axial unmittelbar benachbart zu einer jeweiligen Trägerscheibe der Trägerstruktur 28 angeordnet.

In Zuordnung zu jeder derartigen schlitzartigen Befestigungsorgan-Durchgriffsöffnung 78 bzw. in Zuordnung zu jedem durch eine derartige Befestigungsorgan-Durchgriffsöffnung 78 durchgreifend zu positionierenden Befestigungsorgan 76 der Mitten-Verbindungsbereiche 70, 72 ist am Walzenkörper 22 ein Befestigungsbereich 80 gebildet. Im dargestellten Ausgestaltungsbeispiel sind diese Befestigungsbereiche 80 am radial äußeren Bereich einer jeweiligen Trägerscheibe der Trägerstruktur 28 ausgebildet und umfassen jeweils zwei beispielsweise mit Innengewinde versehene Öffnungen.

Beim Aufbringen eines jeweiligen Ummantelungssegments 40 auf den Walzenkörper 22 werden die plattenartig ausgebildeten Befestigungsorgane 76 der Mitten-Verbindungsbereiche 72, 74 durch die axial unmittelbar neben den Trägerscheiben vorgesehenen Befestigungsorgan-Durchgriffsöffnungen 78 hindurchgeführt, so dass sie an einer Walzenmantel-Innenseite nach radial innen hervorstehen. Durch in diesen Befestigungsorganen 76 vorgesehene Öffnungen können Schraubbolzen hindurchgeführt und in die Öffnungen des jeweils zugeordneten Befestigungsbereichs 80 in der Trägerstruktur 28 eingeschraubt werden.

Die in den End-Verbindungsbereichen 66, 68 vorgesehenen Befestigungsorgane 76 sind bolzenartig ausgestaltet und erstrecken sich an der Ummantelungssegment-Innenseite 74 im Wesentlichen nach radial innen. Diese bolzenartigen Befestigungsorgane 76 sind mit einem bezüglich eines Bolzenschafts erweiterten Bolzenfuß aufgebaut, welcher durch Verschweißung an einer jeweiligen Segmentschale 42 festgelegt werden kann, so dass auch die bolzenartig ausgebildeten Befestigungsorgane 76 der End-Verbindungsbereiche 66, 68 an den Segmentschalen 42 feststehend angeordnet sind. Dabei ist zu erkennen, dass im Bereich von keinem der Befestigungsorgane 76 in der diese jeweils tragenden Segmentschale 42 eine Öffnung gebildet ist, beispielsweise um ein jeweiliges Befestigungsorgan durch eine Segmentschale hindurchführen zu können. Dies hat zur Folge, dass insbesondere in denjenigen Bereichen, in welchen an den Segmentschalen 42 Befestigungsorgane 76 angeordnet sind, an der beispielsweise nach außen freiliegenden Außenseite der Segmentschalen keine einem Verschleiß unterliegende oder ein Arbeitsergebnis beeinträchtigende Öffnungen gebildet sind.

In Zuordnung zu den in den End-Verbindungsbereichen 66, 68 vorgesehenen, bolzenartigen Befestigungsorganen 76 sind in dem Walzenmantel 34 gleichermaßen schlitzartige und im Wesentlichen in Umfangsrichtung langgestreckte Bolzenorgan-Durchgriffsöffnungen 78 vorgesehen. Diese in den axialen Endbereichen des Walzenmantels 34 angeordneten Befestigungsorgan-Durchgriffsöffnungen 78 weisen in einem in ihren Längenmitten liegenden Längenbereich eine Erweiterung auf. In diesen Erweiterungen können die Bolzenfüße der in diese Befestigungsorgan-Durchgriffsöffnungen 78 eingreifend zu positionierenden, bolzenartigen Befestigungsorgane 76 aufgenommen werden.

Bei an dem Walzenmantel 34 radial außen anliegenden Ummantelungssegmenten 34 stehen die in den End-Verbindungsbereichen 66, 68 vorgesehenen bolzenartigen Befestigungsorgane 76 radial innen über den Walzenmantel 34 über. Dabei liegen jeweils zwei verschiedenen Ummantelungssegmenten 34 zugeordnete bolzenartige Befestigungsorgane 76 paarweise in Umfangsrichtung nebeneinander und sind durch eine jeweilige Klemmbacken Anordnung 82 umgriffen und somit bezüglich der Trägerschale 34 fest gehalten.

Im Bereich der Walzenwerkzeuge 48 sind Werkzeugdurchgriffsöffnungen 84 in den Segmentschalen 42 gebildet, um von innen her Zugriff auf die Wechselwerkzeuge 52 zu haben und diese somit von den Wechselhaltern 50 lösen zu können. Diese Werkzeugdurchgriffsöffnungen 84 sind durch die Wechselhalter 50 außen überdeckt, so dass die Gefahr des Eindringens von Material durch diese Werkzeugdurchgriffsöffnungen 84 hindurch bzw. die Gefahr eines Verschleißes im Bereich dieser Werkzeugdurchgriffsöffnungen 84 nicht gegeben ist.

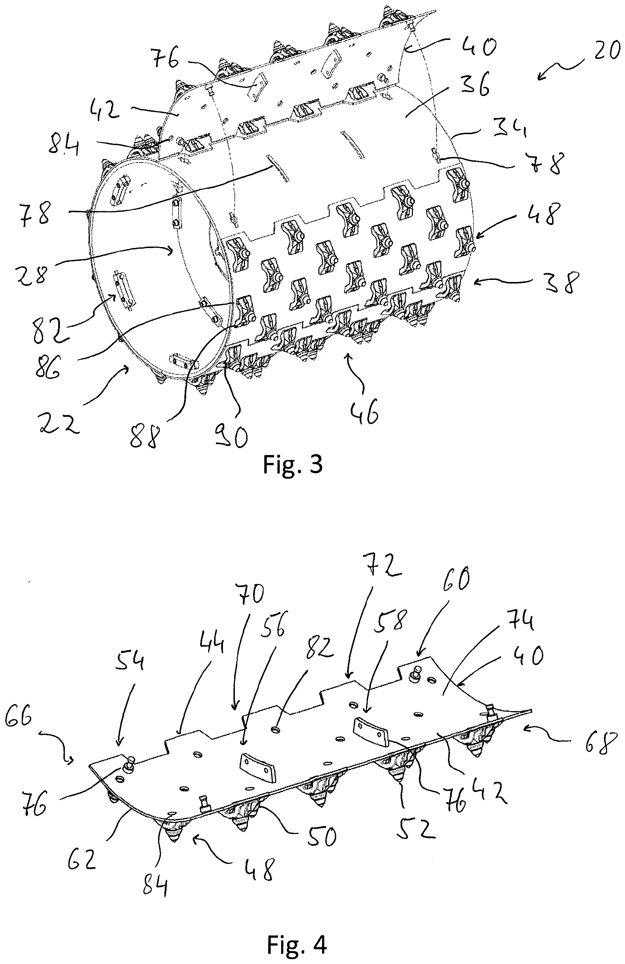

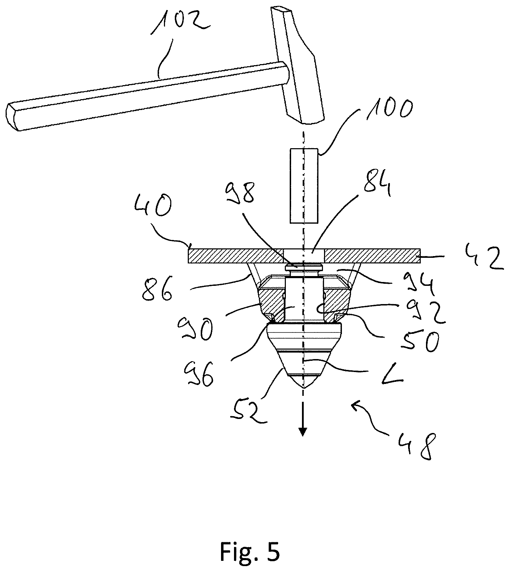

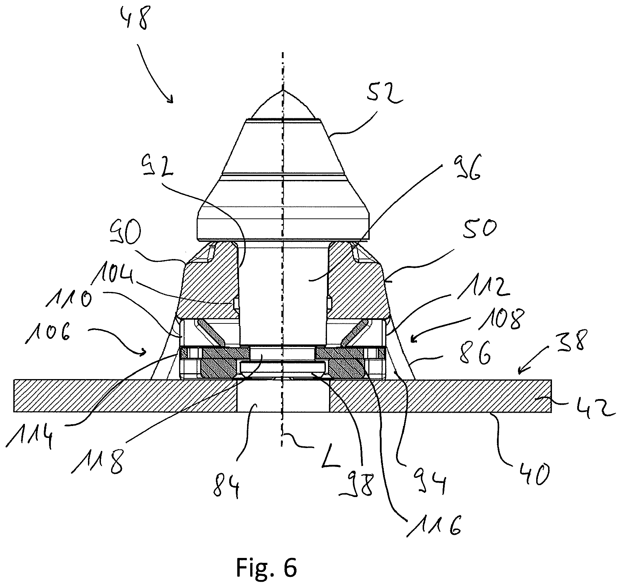

Die Fig. 4 zeigt, dass in Zuordnung zu jedem an einer Segmentschale 42 getragenen Wechselhalter 50 eine derartige Werkzeugdurchgriffsöffnung 84 vorgesehen ist, so dass bei von dem Walzenkörper 22 losgelösten Ummantelungssegmenten 40 nachfolgend mit Bezug auf die Fig. 5 und 6 beschriebener Art und Weise die in den Wechselhaltern 50 getragenen Wechselwerkzeuge 52 beispielsweise dann, wenn sie verschlissen sind oder gegen Wechselwerkzeuge anderer Art ausgetauscht werden sollen, entfernt werden können. Da dieser Vorgang des Erneuerns oder Austauschens der Wechselwerkzeuge 50 in einem Zustand erfolgen kann, in welchem die Ummantelungssegmente 40 der Ummantelung 38 vom Walzenkörper 22 entfernt sind, ist einerseits der Vorgang zum Loslösen der Wechselwerkzeuge 52 leicht durchführbar, andererseits kann eine Bodenbearbeitungsmaschine während der Durchführung dieses Arbeitsgangs weiterhin genutzt werden, beispielsweise indem eine andere Ummantelung 38 an dem Walzenkörper 22 angebracht wird.

Die Fig. 5 und 6 zeigen einen am Außenumfang einer Segmentschale 42 eines Walzenmantelsegments 40 angebrachten Wechselhalter 50. Dieser kann beispielsweise so aufgebaut sein, wie in der WO 2013/107545 A2 bzw. der EP 2 843 135 A1 offenbart. Der Wechselhalter 50 kann zwei in Umfangsrichtung aufeinanderfolgend angeordnete und an die Außenseite der Segmentschale 42 durch Verschweißung angebundene Fußbereiche 86, 88 aufweisen, welche einen Körperbereich 90 mit einer darin ausgebildeten Befestigungsöffnung 92 tragen bzw. damit integral ausgebildet sind. Zwischen den Fußbereichen 86, 88 und dem Körperbereich 90 ist ein nach radial innen durch die Segmentschale 42 begrenzter Wechselhalterinnenraum 94 gebildet. Ein beispielsweise mit runder, insbesondere kreisrunder, Querschnittsgeometrie ausgebildeter, bolzenartiger oder vorsprungartiger Befestigungsschaft 96 des im dargestellten Ausgestaltungsbeispiel als Meißel ausgebildeten Wechselwerkzeugs 52 erstreckt sich durch die Befestigungsöffnung 92 hindurch und liegt mit einem Werkzeugangriffsende 98 im Wechselhalterinnenraum 94. Der Befestigungsschaft 96 kann in der diesen aufnehmenden Befestigungsöffnung 92 durch Klemm- bzw. Rastwirkung gehalten sein, so dass im Arbeitsbetrieb ein Loslösen des Wechselwerkzeugs 52 von dem dieses tragenden Wechselhalter 50 verhindert ist. Diese Klemm- bzw. Rastwirkung kann beispielsweise dadurch erzeugt werden, dass in einer zur Befestigungsöffnung 92 offenen Innenumfangsnut 104 ein ringfederartiges Rastelement vorgesehen ist, das in eine entsprechende Außenumfangsnut am Befestigungsschaft 96 einrasten kann.

In Fig. 6 ist eine alternative Art der Halterung des Wechselwerkzeugs 52 am Wechselhalter 50 dargestellt. Im Wechselhalter 50 sind zwischen den beiden Fußbereichen 86, 88 Öffnungen 106, 108 gebildet, über welche der Wechselhalterinnenraum 94 seitlich offen ist. In diese seitlichen Öffnungen 106, 108 können Halteelemente 110, 112 seitlich eingeschoben werden, so dass sie mit daran jeweils getragenen, beispielsweise mit Metallmaterial aufgebauten Halteplatten 114, 116 in eine Umfangsnut 118 am Befestigungsschaft 96 eingreifen. Die beiden Halteelemente 110, 112 können in diesem Zustand miteinander beispielsweise durch Verschraubung fest verbunden sein, so dass sie gegen ein Herausbewegen aus den Öffnungen 106, 108 gesichert sind.

Die in Zuordnung zu dem Wechselhalter 50 in der Segmentschale 42 ausgebildete Werkzeugdurchgriffsöffnung 84 ist vorzugsweise derart angeordnet, dass sie zu der Befestigungsöffnung 92 bzw. einer Öffnungslängsachse L der Befestigungsöffnung 92 koaxial liegt. Dies bedeutet, dass bei im Wechselhalter 50 getragenem Wechselwerkzeug 52 der Befestigungsschaft 96 mit seinem Werkzeugangriffsende 98 gleichermaßen im Wesentlichen koaxial zur Werkzeugdurchgriffsöffnung 84 positioniert ist und beispielsweise dieser unmittelbar gegenüberliegt. Bei entsprechender Dimensionierung könnte der Befestigungsschaft 96 mit seinem Werkzeugangriffsende 98 sich bis in die Werkzeugdurchgriffsöffnung 84 hinein erstrecken. Durch den nahe an bzw. in der Werkzeugdurchgriffsöffnung 84 endenden und mit näherungsweise gleicher Querschnittsabmessung wie diese ausgebildeten Befestigungsschaft 96 ist bei am Wechselhalter 50 getragenem Wechselwerkzeug 52 die Werkzeugdurchgriffsöffnung 84 im Wesentlichen überdeckt bzw. abgeschlossen, so dass seitlich in den Wechselhalterinnenraum 94 eintretende Verunreinigungen oder Erdmaterial oder dergleichen nicht in die Werkzeugdurchgriffsöffnung 84 gelangen können. Da, wie nachfolgend beschrieben, ein seitlicher Eingriff in den Wechselhalterinnenraum 94 zum Loslösen des Wechselwerkzeugs 52 nicht erforderlich ist, könnte insbesondere dann, wenn das Wechselwerkzeug 52 durch Verrastung in der Befestigungsöffnung 92 des Wechselhalters 50 gehalten ist, der Wechselhalter 50 über seinen ganzen Umfang geschlossen sein, so dass grundsätzlich das Eindringen von Verunreinigungen in den Wechselhalterinnenraum 94, welcher beispielsweise durch die nach radial innen sich erstreckende Befestigungsöffnung 92 bzw. einen daran anschließenden Volumenbereich bereitgestellt sein kann, nicht möglich ist.

Zum Loslösen des Wechselwerkzeugs 52 vom Wechselhalter 50 kann, beispielsweise nachdem die beiden Halteelemente 110, 112 vom Wechselhalter 50 entfernt worden sind, ein beispielsweise bolzenartig ausgebildetes Beaufschlagungswerkzeug 100 durch die Werkzeugdurchgriffsöffnung 84 hindurch an das Werkzeugangriffsende 98 des Befestigungsschafts 96 herangeführt werden. Nachfolgend kann vermittels eines beispielsweise als Hammer ausgebildeten Schlagwerkzeugs 102 auf das Beaufschlagungswerkzeug 100 geschlagen werden und somit der Befestigungsschaft 96 vom Wechselhalter gelöst werden, wobei eine aufgrund der leicht konischen Formgebung des Befestigungsschafts 96 und der diesen aufnehmenden Befestigungsöffnung 92 generierte Reibklemmwirkung überwunden wird und der Befestigungsschaft 96 aus der diesen aufnehmenden Befestigungsöffnung 92 herausgeschlagen bzw. herausgeschoben wird, bis das Wechselwerkzeug 52 vollständig vom Wechselhalter 50 losgelöst ist. Nachfolgend kann ein neues oder anderes Wechselwerkzeug 52 von außen in die Befestigungsöffnung 92 des Wechselhalters 50 eingeschoben bzw. eingepresst werden, bis dieses mit seinem Befestigungsschaft 96 vollständig in der Befestigungsöffnung 92 aufgenommen ist und beispielsweise mit einem Werkzeugkopf am Körperbereich 90 des Wechselhalters 50 abgestützt ist. Bei Einsatz einer Rastverbindung wird der Rastzustand beim Einschieben des Befestigungsschafts 96 automatisch erzeugt. Bei Einsatz der in Fig. 6 dargestellten Halteelemente 110, 112 können diese nach dem Einführen des Befestigungsschafts 96 in die Befestigungsöffnung 92 in den Öffnungen 106, 108 des Wechselhalters 50 den Befestigungsschaft 96 umgreifend angeordnet werden.

Da gemäß den Prinzipien der vorliegenden Erfindung die mit einem Wechselhalter und einem Wechselwerkzeug aufgebauten Walzenwerkzeuge an einer an einem Walzenkörper lösbar, diesen umgebend anbringbaren Ummantelung vorgesehen sind, besteht, die Möglichkeit, in der in Fig. 5 dargestellten Art und Weise von der Innenseite der jeweiligen Ummantelungssegmente auf die Wechselwerkzeuge einzuwirken und diese somit vom jeweiligen Wechselhalter zu lösen. Dies ist insbesondere von Vorteil, da vor allem im Längenmittenbereich einer jeweiligen Bodenbearbeitungswalze angeordnete Walzenwerkzeuge von der Innenseite eines Walzenmantels her grundsätzlich nicht zugänglich sind.

Die Prinzipien der vorliegenden Erfindung können Anwendung finden bei Bodenbearbeitungswalzen, welche, wie in dem vorangehend beschriebenen Ausgestaltungsbeispiel vorgesehen, einen Walzenkörper umfassen, der selbst keine Arbeits-Außenseite bereitstellt, sondern lediglich als Träger für einen durch die Ummantelung bereitgestellten Arbeitsmantel dient, der, angepasst an jeweils durchzuführende Arbeitsvorgänge, mit einer dafür geeigneten Gestalt an seiner Arbeits-Außenseite ausgebildet ist. Der Walzenmantel eines derartigen Walzenkörpers bildet somit lediglich einen Trägermantel, welcher dazu vorgesehen und ausgebildet ist, die die Arbeits-Außenseite bereitstellende Struktur, nämlich die als Arbeitsmantel wirksame Ummantelung, zu tragen.

Alternativ kann die erfindungsgemäße Ausgestaltung einer Ummantelung für eine Bodenbearbeitungswalze auch Anwendung finden, wenn diese Ummantelung am Außenumfang einer Bodenbearbeitungswalze bzw. eines Walzenkörpers anzubringen ist, welcher selbst auch eine Arbeits-Außenseite bereitstellen kann. Beispielsweise könnte ein derartiger Walzenkörper bzw. dessen Walzenmantel mit einer im Wesentlichen glatten, unstrukturierten Außenumfangskontur bereitgestellt sein und somit beispielsweise zum Verdichten von Asphaltmaterial oder dergleichen eingesetzt werden. Soll eine derartige Bodenbearbeitungswalze dann bei einem anderen Arbeitsvorgang, beispielsweise zum Zerbrechen eines festen Untergrunds, eingesetzt werden, kann diese mit einer Ummantelung umgeben werden, welche die vorangehend beschriebene Struktur mit mehreren Ummantelungssegmenten und an den Segmentschalen derselben getragenen Walzenwerkzeugen umfasst. Bei derartiger Ausgestaltung können beispielsweise die einzelnen Ummantelungssegmente in Umfangsrichtung aufeinanderfolgend fest verbunden, beispielsweise verschraubt werden, um eine den Walzenmantel einer Bodenbearbeitungswalze umgebende ringartige Struktur zu erreichen.

Weiter ist darauf hinzuweisen, dass selbstverständlich die erfindungsgemäße Ausgestaltung einer Ummantelung für eine Bodenbearbeitungswalze auch in Verbindung mit anderen Wechselwerkzeugen eingesetzt werden kann. Anstelle der in der vorliegenden Anmeldung dargestellten Spitzmeißel könnten beispielsweise auch schneidenartig ausgebildete Meißel oder Stampffüße als Wechselwerkzeuge in Verbindung mit am Außenumfang der Ummantelung vorgesehenen Wechselhaltern eingesetzt werden.

## Patentansprüche

1. Ummantelung für eine um eine Walzendrehachse (W) drehbare Bodenbearbeitungswalze (20) einer Bodenbearbeitungsmaschine (10), umfassend eine Mehrzahl von in Umfangsrichtung aufeinander folgend, einen Walzenkörper (22) der Bodenbearbeitungswalze (20) umgebend angebrachten oder anbringbaren Ummantelungssegmenten (40), wobei an einer von dem Walzenkörper (22) abgewandt zu positionierenden Außenseite der Ummantelungssegmente (40) eine Mehrzahl von Walzenwerkzeugen (48) angeordnet ist, **dadurch gekennzeichnet, dass** wenigstens ein Teil der Walzenwerkzeuge (48) einen an der Außenseite eines jeweiligen Ummantelungssegments (48) angebrachten Wechselhalter (50) und ein an dem Wechselhalter (50) von diesem lösbar angebrachtes oder anbringbares Wechselwerkzeug (52) umfasst, wobei in dem Wechselhalter (50) eine Befestigungsöffnung (92) zur Aufnahme eines Befestigungsschafts (96) eines an dem Wechselhalter (50) angebrachten oder anzubringenden Wechselwerkzeugs (52) ausgebildet ist, wobei in Zuordnung zu wenigstens einem Wechselhalter (50) in dem diesen tragenden Ummantelungssegment (40) eine Werkzeugdurchgriffsöffnung (84) vorgesehen ist.

2. Ummantelung nach Anspruch 1,
**dadurch gekennzeichnet, dass** die in Zuordnung zu dem wenigstens einen Wechselhalter (50) vorgesehene Werkzeugdurchgriffsöffnung (84) zu der in diesem ausgebildeten Befestigungsöffnung (92) im Wesentlichen koaxial angeordnet ist.

3. Ummantelung nach Anspruch 1 oder 2,
**dadurch gekennzeichnet, dass** in dem wenigstens einen Wechselhalter (50) ein Wechselhalterinnenraum (94) ausgebildet ist, wobei die in diesem Wechselhalter (50) vorgesehene Befestigungsöffnung (92) zu dem Wechselhalterinnenraum (94) offen ist, und dass die in Zuordnung zu diesem Wechselhalter (50) vorgesehene Werkzeugdurchgriffsöffnung (84) zu dem Wechselhalterinnenraum (94) offen ist.

4. Ummantelung nach Anspruch 3,
**dadurch gekennzeichnet, dass** bei an dem wenigstens einen Wechselhalter (50) angebrachtem Wechselwerkzeug (52) der Befestigungsschaft (96) dieses Wechselwerkzeugs (52) sich in den Wechselhalterinnenraum (94) hinein erstreckt und mit einem Werkzeugangriffsende (98) der Werkzeugdurchgriffsöffnung (84) gegenüberliegend oder in die Werkzeugdurchgriffsöffnung (84) eingreifend positioniert ist.

5. Ummantelung nach Anspruch 3 oder 4,
**dadurch gekennzeichnet, dass** bei an dem wenigstens einen Wechselhalter (50) angebrachtem Wechselwerkzeug (52) der Wechselhalterinnenraum (94) im Wesentlichen nur über die zu diesem offene Werkzeugdurchgriffsöffnung (84) offen ist.

6. Ummantelung nach einem der vorangehenden Ansprüche,
**dadurch gekennzeichnet, dass** bei an dem wenigstens einen Wechselhalter (50) angebrachtem Wechselwerkzeug (52) die Werkzeugdurchgriffsöffnung (84) durch den Befestigungsschaft (96) dieses Wechselwerkzeugs (52) im Wesentlichen abgeschlossen ist.

7. Verfahren zum Wechseln eines an einer Ummantelung (38) nach einem der vorangehenden Ansprüche an dem wenigstens einen Wechselhalter (50) angebrachten Wechselwerkzeugs (52), bei welchem Verfahren bei von dem Walzenkörper (22) wenigstens teilweise losgelöstem Ummantelungssegment (40) der in der Befestigungsöffnung (92) des wenigstens einen Wechselhalters (50) aufgenommene Befestigungsschaft (96) durch die Werkzeugdurchgriffsöffnung (84) hindurch beaufschlagt wird zum Herausbewegen des Befestigungsschafts (92) aus der Befestigungsöffnung (92) des wenigstens einen Wechselhalters (50).

8. Verfahren nach Anspruch 7,
**dadurch gekennzeichnet, dass** der Befestigungsschaft (96) durch schlagende oder/und drückende Beaufschlagung aus der Befestigungsöffnung (92) herausbewegt wird.

9. Verfahren nach Anspruch 7 oder 8,
**dadurch gekennzeichnet, dass** der Befestigungsschaft (96) vermittels eines durch die Werkzeugdurchgriffsöffnung (84) auf diesen einwirkenden Beaufschlagungswerkzeugs (100) beaufschlagt wird.

10. Verfahren nach Anspruch 9,
**dadurch gekennzeichnet, dass** der Befestigungsschaft (96) durch schlagende Beaufschlagung des Beaufschlagungswerkzeugs (100) vermittels eines Schlagwerkzeugs (102) beaufschlagt wird.

11. Bodenbearbeitungswalze für eine Bodenbearbeitungsmaschine, umfassend einen Walzenkörper (22) und eine den Walzenkörper (22) umgebende Ummantelung (38) nach einem der Ansprüche 1-6.

12. Bodenbearbeitungsmaschine, umfassend wenigstens eine Bodenbearbeitungswalze (20) nach Anspruch 11.

## Claims

1. Sheath for a soil working roller (20) of a soil processing machine (10), rotatable about a roller axis of rotation (W), comprising a plurality of sheath segments (40), mounted or mountable to surround a roller body (22) of the soil working roller (20) and following one another in the circumferential direction, wherein a plurality of roller tools (48) is arranged on an outer side of the sheath segments (40) to be positioned facing away from the roller body (22),
**characterized in that** at least part of the roller tools (48) comprise an interchangeable holder (50) mounted on an outer side of a respective sheath segment (48) and a replaceable tool (52) detachably mounted or mountable on the interchangeable holder (50), wherein a fastening opening (92) is formed in the interchangeable holder (50) for accommodating a fastening shaft (96) of a replaceable tool (52) mounted or to be mounted on the interchangeable holder (50), wherein a tool through opening (84) is provided in association with the at least one interchangeable holder (50) in the sheath segment (40) supporting the same.

2. Sheath according to claim 1,
**characterized in that** the tool through opening (84), provided in association with the at least one interchangeable holder (50), is arranged substantially coaxial with the fastening opening (92) formed in the same.

3. Sheath according to claim 1 or 2,
**characterized in that** an interchangeable holder interior space (94) is formed in the at least one interchangeable holder (50), wherein the fastening opening (92) provided in this interchangeable holder (50) is open to the interchangeable holder interior space (94) and that the tool through opening (84) provided in association with this interchangeable holder (50) is open to the interchangeable holder interior space (94).

4. Sheath according to claim 3,
**characterized in that,** in the case of a replaceable tool (52) mounted on the at least one interchangeable holder (50), the fastening shaft (96) of this replaceable tool (52) extends into the interchangeable holder interior space (94) and is positioned with a tool engaging end (98) opposite the tool through opening (84) or engaging into the tool through opening (84).

5. Sheath according to claim 3 or 4,
**characterized in that,** in the case of a replaceable tool (52) mounted on the at least one interchangeable holder (50), the interchangeable holder interior space (94) is substantially open only via the tool through opening (84) open to the same.

6. Sheath according to one of the preceding claims,
**characterized in that,** in the case of a replaceable tool (52) mounted on the at least one interchangeable holder (50), the tool through opening (84) is substantially closed by the fastening shaft (96) of this replaceable tool (52).

7. Method for changing a replaceable tool (52), mounted on the at least one interchangeable holder (50) on a sheath (38) according one of the preceding claims, in which method, in the case of a sheath segment (40) at least partially detached from the roller body (22), the fastening shaft (96), accommodated in the fastening opening (92) of the at least one interchangeable holder (50), is impacted through the tool through opening (84) to move the fastening shaft (96) out of the fastening opening (92) of the at least one interchangeable holder (50).

8. Method according to claim 7,
**characterized in that** the fastening shaft (96) is moved out of the fastening opening (92) by hitting and/or pressing impact.

9. Method according to claim 7 or 8,
**characterized in that** the fastening shaft (96) is impacted by means of an impacted tool (100) acting on the same through the tool through opening (84).

10. Method according to claim 9,
**characterized in that** the fastening shaft (96) is impacted by hitting impact of the impacted tool (100) by means of an impacting tool (102).

11. Soil working roller for a soil processing machine comprising a roller body (22) and a sheath (38) according to one of claims 1-6 surrounding the roller body (22).

12. Soil processing machine comprising at least one soil working roller (20) according to claim 11.

## Revendications

1. Enveloppe pour un rouleau de traitement du sol (20) d'une machine de traitement du sol (10), rotatif autour d'un axe de rotation du rouleau (W), comprenant une pluralité de segments d'enveloppe (40), montés ou pouvant être montés pour entourer un corps de rouleau (22) du rouleau de traitement du sol (20) se suivant dans la direction circonférentielle, dans lequel une pluralité d'outils de rouleau (48) est disposée sur un côté extérieur des segments d'enveloppe (40) à positionner à l'opposé du corps de rouleau (22),
**caractérisé en ce qu'**au moins une partie des outils à rouleaux (48) comprend un support interchangeable (50) monté sur un côté extérieur d'un segment d'enveloppe respectif (48) et un outil interchangeable (52) monté de manière amovible ou montable sur le support interchangeable (50), dans lequel une ouverture de fixation (92) est formée dans le support interchangeable (50) pour accueillir un arbre de fixation (96) d'un outil interchangeable (52) monté ou à monter sur le support interchangeable (50), dans lequel une ouverture de passage d'outil (84) est prévue en association avec ledit au moins un support interchangeable (50) dans le segment d'enveloppe (40) supportant ce dernier.

2. Enveloppe selon la revendication 1,
**caractérisée en ce que** l'ouverture de passage d'outil (84), prévue en association avec ledit au moins un support interchangeable (50), est disposée de manière essentiellement coaxiale à l'ouverture de fixation (92) formée dans ce dernier.

3. Enveloppe selon la revendication 1 ou 2,
**caractérisée en ce qu'**un espace intérieur de support interchangeable (94) est formé dans ledit au moins un support interchangeable (50), dans lequel l'ouverture de fixation (92) prévue dans ce support interchangeable (50) est ouverte sur l'espace intérieur de support interchangeable (94) et **en ce que** l'ouverture de passage d'outil (84) prévue en association avec ce support interchangeable (50) est ouverte sur l'espace intérieur de support interchangeable (94).

4. Enveloppe selon la revendication 3,
**caractérisée en ce que**, dans le cas d'un outil interchangeable (52) monté sur ledit au moins un support interchangeable (50), l'arbre de fixation (96) de cet outil interchangeable (52) s'étend dans l'espace intérieur du support interchangeable (94) et est positionné avec une extrémité d'engagement d'outil (98) opposée à l'ouverture de passage d'outil (84) ou s'engageant dans l'ouverture de passage d'outil (84).

5. Enveloppe selon la revendication 3 ou 4,
**caractérisée en ce que**, dans le cas d'un outil interchangeable (52) monté sur ledit au moins un support interchangeable (50), l'espace intérieur du support interchangeable (94) n'est essentiellement ouvert que par l'ouverture de passage d'outil (84) ouverte sur ce dernier.

6. Enveloppe selon l'une des revendications précédentes,
**caractérisée en ce que**, dans le cas d'un outil interchangeable (52) monté sur ledit au moins un support interchangeable (50), l'ouverture de passage d'outil (84) est essentiellement fermée par l'arbre de fixation (96) de cet outil interchangeable (52).

7. Procédé de changement d'un outil interchangeable (52), monté sur ledit au moins un support interchangeable (50) sur une enveloppe (38) selon l'une des revendications précédentes, dans lequel procédé, dans le cas d'un segment d'enveloppe (40) au moins partiellement détaché du corps de rouleau (22), l'arbre de fixation (96), logé dans l'ouverture de fixation (92) dudit au moins un support interchangeable (50), est sollicité à travers l'ouverture de passage d'outil (84) pour déplacer l'arbre de fixation (96) hors de l'ouverture de fixation (92) dudit au moins un support interchangeable (50).

8. Procédé selon la revendication 7,
**caractérisé en ce que** l'arbre de fixation (96) est déplacée hors de l'ouverture de fixation (92) par un impact de frappe et/ou de pression.

9. Procédé selon la revendication 7 ou 8,
**caractérisé en ce que** l'arbre de fixation (96) est sollicité au moyen d'un outil de sollicitation (100) agissant sur lui à travers l'ouverture de passage d'outil (84).

10. Procédé selon la revendication 9,
**caractérisé en ce que** l'arbre de fixation (96) est sollicité par l'impact de l'outil de sollicitation (100) au moyen d'un outil de frappe (102).

11. Rouleau de traitement du sol pour une machine de traitement du sol comprenant un corps de rouleau (22) et une enveloppe (38) entourant le corps de rouleau (22) selon l'une des revendications 1 à 6.

12. Machine de traitement du sol comprenant au moins un rouleau de traitement du sol (20) selon la revendication 11.
